Europäisches Patentamt

European Patent Office

Office européen des brevets

(19)

(11) Numéro de publication : **0 081 428**
**B1**

(12) **FASCICULE DE BREVET EUROPÉEN**

(45) Date de publication du fascicule du brevet : 30.07.86

(51) Int. Cl.⁴ : **G 21 C   3/32**

(21) Numéro de dépôt : **82402204.0**

(22) Date de dépôt : **03.12.82**

(54) **Assemblage combustible pour un réacteur nucléaire sous-modéré.**

(30) Priorité : 04.12.81 FR 8122751

(43) Date de publication de la demande :
15.06.83 Bulletin 83/24

(45) Mention de la délivrance du brevet :
30.07.86 Bulletin 86/31

(84) Etats contractants désignés :
BE DE FR GB IT

(56) Documents cités :
DE-A- 2 529 976
DE-A- 3 022 747
FR-A- 2 141 559
FR-A- 2 146 976
FR-A- 2 325 156
US-A- 3 849 248
US-A- 3 943 036

(73) Titulaire : **Framatome**
**Tour Fiat 1 place de la Coupole**
**F-92400 Courbevoie (FR)**

(72) Inventeur : **Millot, Jean-Paul**
**1 allée des Roitelets**
**F-78310 Elancourt (FR)**
Inventeur : **Alibran, Patrice**
**62 rue Amelot**
**F-75011 Paris (FR)**
Inventeur : **Desfontaines, Guy**
**18 rue Jean Jaurès**
**F-92800 Puteaux (FR)**

(74) Mandataire : **Fort, Jacques**
**CABINET PLASSERAUD 84, rue d'Amsterdam**
**F-75009 Paris (FR)**

## Description

L'invention concerne un assemblage combustible pour un réacteur nuclaire sous-modéré comportant un cœur baignant dans un fluide modérateur, constitué par des assemblages combustibles disposés côte à côte, les uns renfermant principalement un matériau fissile et les autres un matériau fertile susceptible de se transformer en matériau fissile sous l'effet du bombardement neutronique, chacun des assemblages du cœur étant constitué par un boîtier prismatique, à l'intérieur duquel des crayons de grande longueur renfermant le matériau fissile ou le matériau fertile sont disposés parallèlement à la hauteur du boîtier, et suivant un réseau régulier dans les sections droites de ce boîtier, avec un espacement faible entre les crayons.

Par rapport aux réacteurs nucléaires à eau sous pression de type classique qui ne comportent que des assemblages fissiles, le réacteur sous-modéré présente un rapport volume de modérateur/volume du matériau fissile dans le cœur ou rapport de modération VM/VU très inférieur si bien que le spectre d'énergie des neutrons est très différent.

Ce spectre est intermédiaire entre celui d'un réacteur à eau sous pression classique où les neutrons sont très lents et celui des réacteurs rapides où les neutrons ne sont pas ralentis.

Le spectre d'énergie des neutrons dans les réacteurs sous-modérés est dit « épithermique ».

Un tel spectre de neutrons épithermique permet de produire de la matière fissile à partir de matière fertile disposée, par exemple, à la périphérie du cœur. On obtient un rapport de modération faible dans les réacteurs dits « sous-modérés », en prévoyant une répartition du matériau combustible dans les assemblages fissiles assurant à la fois un contact optimum avec le modérateur et un faible rapport volumique entre le modérateur et le matériau fissile.

Les assemblages combustibles, qu'ils soient fissiles ou fertiles, sont généralement constitués par un boîtier de forme prismatique en un matériau absorbant faiblement les neutrons, tel qu'un alliage de zirconium, à l'intérieur duquel des crayons tubulaires de grande longueur renfermant le matériau fissile ou le matériau fertile sont disposés parallèlement à la hauteur du boîtier et suivant un réseau régulier dans les sections droites de ce boîtier. Ces crayons de matériau combustible sont constitués par un tube en matériau de gainage rempli par des pastilles renfermant le matériau fissile ou fertile. Ces crayons disposés parallèlement les uns aux autres dans l'assemblage constituent un faisceau, l'écartement entre les crayons étant maintenu par des dispositifs d'espacement tels que des fils enroulés en hélice autour de la gaine des crayons ou des nervures et aspérités prévues sur cette gaine. Cette disposition permet la circulation du fluide caloporteur et modérateur en contact avec toute la surface du crayon, tout en autorisant un très faible espacement entre les crayons, c'est-à-dire l'obtention d'un réseau très dense dans lequel les gaines des crayons ne sont cependant jamais jointives. Un tel réseau à grande densité des crayons en matériau fissile permet d'obtenir un facteur de modération faible.

Il est cependant difficile d'assurer un taux de modération constant dans toute la section droite d'un assemblage combustible pour réacteur nuclaire sous-modéré, en particulier, au voisinage des zones périphériques de l'assemblage, le taux de modération varie considérablement du fait de la présence d'une lame d'eau d'épaisseur relativement importante au voisinage de la paroi dans la zone entre deux crayons successifs.

Ceci peut entraîner une dégradation des performances des réacteurs sous-modérés.

L'invention vise donc à fournir un assemblage combustible du type ci-dessus défini présentant un espacement faible entre les crayons, cet assemblage combustible permettant d'obtenir un rapport de modération pratiquement constant dans les sections droites de l'assemblage.

Il faut remarquer que le problème posé est différent de celui que visent à résoudre les assemblages de l'art antérieur ayant une constitution comparable. Les documents FR-A-2 141 559 et FR-A-2 325 156 concernent l'un et l'autre un assemblage de combustible nucléaire destiné à un réacteur à neutrons rapides, donc dans lequel le problème de l'équilibrage du taux de modération ne se pose pas, étant donné que le réfrigérant qui baigne les assemblages n'a pratiquement pas d'effet de ralentissement des neutrons. Ces documents concernent l'équilibrage, non pas du taux de modération, mais de l'écoulement du réfrigérant autour des « aiguilles de combustible ». Il s'agit de deux problèmes complètement différents. En particulier, l'équilibrage des débits peut être obtenu en interposant sur un trajet des étranglements localisés et écartés les uns des autres.

Pour atteindre le résultat recherché par l'invention, la surface externe de chacune des parois latérales du boîtier est plane et sur la surface intérieure de chacune des parois latérales du boîtier, sont réalisées des cannelures dans la direction de la hauteur du boîtier, de façon qu'en vis-à-vis de chacun des crayons placés à la périphérie de l'assemblage soit disposée une cannelure l'espacement ménagé entre la surface externe du crayon périphérique et la surface de la cannelure étant sensiblement constant et sensiblement égal à l'espacement entre les crayons de sorte qu'il est possible de réduire la lame de fluide modérateur qui entoure les crayons situés à la périphérie de l'assemblage à une épaisseur faible et sensiblement égale à celle de la lame qui entoure les crayons à l'intérieur de l'assemblage.

Quant au document DE-A-2 529 976, il concerne un assemblage de combustible pour réacteur à eau bouillante, dans lequel les neutrons sont thermalisés, de sorte que des variations d'épaisseur d'eau entre crayons n'ont pas de conséquence grave.

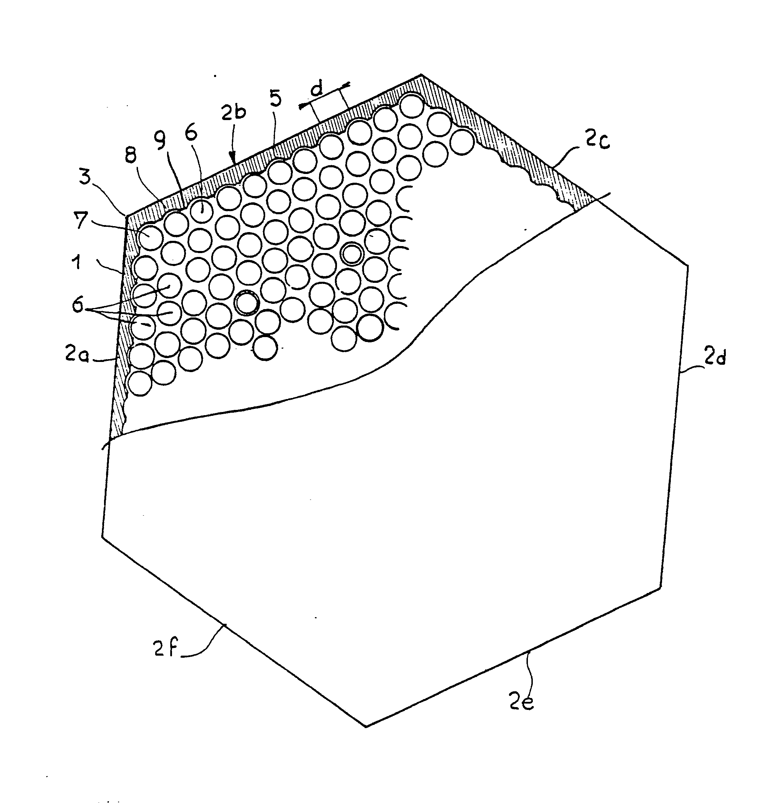

Afin de bien faire comprendre l'invention, on va maintenant décrire à titre d'exemple non limitatif, en se référant à la figure jointe en annexe, un mode de réalisation d'un assemblage combustible fissile suivant l'invention, dans le cas où cet assemblage a une section hexagonale.

La figure unique représente une vue en coupe par un plan perpendiculaire à la hauteur du boîtier, d'un assemblage suivant l'invention à section hexagonale.

Sur la figure unique, on voit le boîtier 1 de l'assemblage dont la section est de forme hexagonale, ce boîtier étant constitué par des parois en acier inoxydable 2a, 2b, 2c, 2d, 2e et 2f soudées entre elles le long des arêtes 3 de l'assemblage, par bombardement électronique.

Sur la face interne de chacune des parois 2, avant leur assemblage, sont réalisées, par laminage ou par usinage, des cannelures cylindriques 5 sur toute la hauteur de là paroi avec un espacement d correspondant au pas des crayons combustibles fissiles 6 de l'assemblage.

Ces crayons combustibles fissiles sont disposés suivant un réseau régulier à mailles triangulaires à l'intérieur du boîtier, avec un certain espacement maintenu grâce à des fils enroulés en hélice autour des crayons.

Les crayons combustibles 6 disposés à la périphérie de l'assemblage sont placés chacun en vis-à-vis d'une cannelure 5 de façon que l'axe de la cannelure et l'axe du crayon soient disposés dans un même plan perpendiculaire à la paroi 2 du boîtier.

Les crayons 6 de la périphérie de l'assemblage sont d'autre part placés au voisinage immédiat de la paroi si bien que la lame d'eau 8 subsistant entre le crayon et la cannelure est d'une très faible épaisseur correspondant à l'épaisseur du dispositif d'espacement utilisé et que la partie en saillie 9 de la paroi disposée entre deux cannelures occupe une partie de l'espace existant entre deux crayons 6 successifs.

De cette façon, la lame d'eau subsistant entre les crayons 6 et la paroi est de faible épaisseur en tout point de la périphérie de l'assemblage.

Il en résulte que le facteur de modération reste faible dans cette zone de l'assemblage et d'une valeur tout à fait comparable à sa valeur dans les parties centrales de la section droite de l'assemblage.

C'est ainsi qu'on a pu mesurer un rapport de modération de 0,60 à la périphérie de l'assemblage, alors que le rapport de modération moyen pour le reste de l'assemblage est de 0,51.

Dans le cas où l'on utilise un boîtier dont la surface interne des parois est plane le rapport de modération augmente considérablement au voisinage de ces parois et prend une valeur supérieure à 1,4.

On voit que le dispositif de l'invention, bien que d'une grande simplicité, permet de résoudre des problèmes liés à l'effet des lames d'eau périphériques dans les assemblages sur le rapport de modération.

On peut encore améliorer les performances de l'assemblage et augmenter la quantité de matériau fertile transformé en matériau fissile en disposant par exemple sur la périphérie de l'assemblage une couche partielle ou complète de crayons combustibles fertiles en uranium naturel ou appauvri, au lieu d'une couche de crayons combustibles fissiles.

Les crayons d'angle 7 peuvent comporter un poison consommable tel que du samarium ou du gadolinium introduit par imprégnation dans les pastilles de combustible.

Lorsque ces parois sont réalisées en acier inoxydable, la fabrication de l'assemblage est grandement facilitée par rapport aux assemblages connus de l'art antérieur où le boîtier était réalisé en alliage de zirconium.

L'assemblage suivant l'invention est donc d'une grande simplicité de réalisation, tout en permettant l'obtention d'un rapport de modération constant dans les sections droites de l'assemblage.

L'invention ne se limite pas au mode de réalisation qui a été décrit, elle en comporte au contraire toutes les variantes.

C'est ainsi qu'on peut imaginer un boîtier prismatique dont la section a une forme différente de la forme hexagonale représentée sur la figure et que ce boîtier peut contenir des crayons combustibles fissiles ou fertiles suivant une disposition différente de ce qui a été décrit.

L'invention s'applique aussi bien dans le cas des assemblages fissiles que dans le cas des assemblages fertiles renfermant principalement un matériau susceptible de produire de la matière fissile sous l'effet du bombardement neutronique.

Enfin, l'assemblage combustible suivant l'invention peut être utilisé dans tous les réacteurs sous-modérés, quel que soit le liquide de modération utilisé.

## Revendications

1. Assemblage combustible pour un réacteur nucléaire sous-modéré, comportant un cœur baignant dans un fluide modérateur, constitué par des assemblages combustibles disposés côte à côte, les uns renfermant principalement un matériau fissile et les autres un matériau fertile susceptible de se transformer en matériau fissile sous l'effet du bombardement neutronique, chacun des assemblages du cœur étant constitué par un boîtier prismatique (1), à l'intérieur duquel des crayons (6) de grande longueur renfermant le matériau fissile ou le matériau fertile sont disposés parallèlement à la hauteur du boîtier (1), et suivant un réseau régulier dans les sections droites de ce boîtier, avec un espacement faible entre les crayons, caractérisé par le fait que la surface externe de chacune des parois latérales du boîtier est plane et que sur la surface intérieure de chacune des parois latérales (2) du boîtier (1), sont réalisées des cannelures (5) dans la direction de la hauteur du boîtier, de façon qu'en vis-à-vis de chacun des crayons (6) placés à la périphérie de l'assemblage soit disposée une cannelure (5) l'espacement ménagé entre la surface externe du crayon périphérique (6) et la surface de la cannelure (5) étant sensiblement constant et sensiblement égal à l'espacement entre les crayons (6) de l'assemblage, de sorte qu'il est possible de réduire la lame de fluide modérateur qui entoure les crayons situés à la périphérie de l'assemblage à une épaisseur faible et sensiblement égale à celle de la lame qui entoure les crayons à l'intérieur de l'assemblage.

2. Assemblage combustible suivant la revendication 1, dans le cas où cet assemblage est un assemblage fissile, caractérisé par le fait qu'une partie au moins des crayons combustibles (6) disposés à la périphérie de l'assemblage renferment un matériau fertile tel que l'uranium naturel ou appauvri.

3. Assemblage combustible suivant l'une quelconque des revendications 1 et 2, dans le cas où cet assemblage est un assemblage fissile, caractérisé par le fait qu'une partie au moins des crayons périphériques (7) de l'assemblage, disposés dans les angles du boîtier (1), renferment des pastilles combustibles imprégnées d'un poison consommable tel que le samarium ou le gadolinium.

## Claims

1. A fuel assembly for an undermoderated nuclear reactor comprising a core immersed in a moderating fluid, which core consists of fuel assemblies arranged side by side, some of them mainly containing fissile material and the others containing a fertile material which can be converted to fissile material under the action of neutron bombardment, each of the assemblies of the core consisting of a prism-shaped casing (1), inside which long rods (6), containing the fissile material or the fertile material, are arranged parallel to the height of the casing (1) and in a uniform lattice in the cross-sections of said casing, with a small spacing between the rods, characterized in that the outer surface of each of the lateral walls of the casing is planar and in that, on the internal surface of each of the lateral walls (2) of the casing (1), channels (5) are formed parallel to the height of the casing, so that a channel is located opposite each of the rods (6) placed at the periphery of the assembly, the spacing provided between the external surface of the peripheral rod (6) and the surface of the channel (5) being substantially constant and substantially equal to the spacing between the rods (6) of the assembly, whereby it is possible to decrease the layer of moderating fluid around the rods at the periphery of the assembly to a small thickness substantially equal to that of the layer around the rods within the assembly.

2. Fuel assembly according to claim 1, in the case where said array is a fissile assembly, characterized in that at least some of the fuel rods (6) arranged at the periphery of the assembly contain a fertile material, such as natural or depleted uranium.

3. Fuel assembly according to any one of claims 1 and 2, in the case where said assembly is a fissile assembly, characterized in that at least some of the peripheral rods (7) of the array, arranged in the corners of the casing (1), contain fuel pellets impregnated with a burnable poison, such as samarium or gadolinium.

## Patentansprüche

1. Brennelementkassette für einen untermoderierten Kernreaktor, der einen in einem Moderatorfluid eingetauchten Kern aufweist, wobei der Kern aus nebeneinander angeordneten Brennelementkassetten besteht, wobei die einen prinzipiell ein spaltbares Material und die anderen ein brütbares Material beinhalten, das unter der Einwirkung des Neutronenbombardements sich in spaltbares Material umwandeln kann und wobei jede Brennelementkassette des Kerns aus einem prismatischen Gehäuse (1) besteht, in dessen Innerem lange Brennstäbe (6) das spaltbare oder das brütbare Material einschließen und zueinander parallel auf dem Niveau des Gehäuses (1) und im Querschnitt dieses Gehäuses gemäß eines regelmäßigen Gitters mit geringem Abstand zueinander angeordnet sind, dadurch gekennzeichnet, daß die Außenfläche einer jeden Seitenfläche des Gehäuses eben ist und daß auf der Innenfläche einer jeden Seitenwand (2) des Gehäuses (1) in Richtung der Längserstreckung des Gehäuses Nuten (5) eingearbeitet sind, derart, daß gegenüber jedem am Rand der Brennelementkassette angeordneten Brennstab (6) eine Nut (5) angeordnet ist, wobei der Abstand zwischen der Außenfläche des peripheren Brennstabs (6) und der Oberfläche der Nut (5) im wesentlichen konstant und im wesentlichen gleich dem Abstand zwischen den Brennstäben (6) der Brennelementkassette ist, derart, daß es möglich ist, die Moderatorfluidschicht, die die an der Peripherie gelegenen Brennstäbe der Brennelementkassette umgibt, auf eine dünne Schicht zu reduzieren, mit einer Dicke, die etwa gleich der Dicke der Schicht ist, die die Brennstäbe im Inneren der Brennelementkassette voneinander trennt.

2. Brennelementkassette nach Anspruch 1, bei der die Kassette oder Kassetten spaltbares Material beinhalten, dadurch gekennzeichnet, daß wenigstens ein Teil der an der Peripherie der Kassette angeordneten Brennstäbe (6) brütbares Material, wie z. B. natürliches Uran oder entreichertes Uran, einschließen.

3. Brennelementkassette nach einem der Ansprüche 1 oder 2, bei der die Kassette oder die Kassetten spaltbares Material beinhalten, dadurch gekennzeichnet, daß mindestens ein Teil der an der Peripherie (7) der Kassette angeordneten Brennstäbe, die in den Ecken des Gehäuses (1) angeordnet sind, Brennstofftabletten beinhalten, die mit abbrennbarem Reaktorgift, wie z. B. Samarium oder Gadolinium, imprägniert sind.